# EUROPÄISCHE PATENTANMELDUNG

(11) **EP 1 248 341 A1**
(43) Veröffentlichungstag der Anmeldung: **09.10.2002**
(21) Anmeldenummer: 02007708.7
(22) Anmeldetag: 05.04.2002
(51) Int. Cl.: H02G 3/06, H02G 3/08

(54) **Einlassdose für Elektroinstallationen**

(30) Priorität: 06.04.2001 CH 6532001
(71) Anmelder: Frey, Paul, 9475 Sevelen (CH)
(72) Erfinder: Frey, Paul, 9475 Sevelen (CH)
(74) Vertreter: Kaminski, Susanne

(57) **Zusammenfassung**

1. Eine erfindungsgemässe Einlassdose, die beim Aufbau von Gebäudeinstallationen mit wenigstens einem Schutzrohr (1a, 1c) mit einem vorgegebenen Aussendurchmesser verbunden wird, weist ein einteiliges Gehäuse (2) auf. Das Gehäuse (2) weist seinerseits einen Boden (3) und eine einenends eine Zugangsöffnung bildende, anderenends mit dem Boden (3) verbundene, insbesondere zusammenhängende, Umwandung (4) auf. Das Gehäuse (2) ist mit wenigstens einer Aufnahme (5) zum Einführen des Schutzrohrs (1a, 1c) versehen. Gemäss der Erfindung ist der Aufnahme (5) eine Einrichtung (6a, 6b, 6c, 6d, 6e) zum, insbesondere selbsthemmenden, Zurückhalten des eingeführten Schutzrohrs (1a, 1c) integral zugeordnet. Diese Zurückhalteeinrichtung (6a, 6b, 6c, 6d, 6e) weist wenigstens zwei gegen das Innere des Gehäuses (2) orientierte Rückhalteelemente (7a, 7b, 7c, 7d, 7e) auf.

## Beschreibung

Die Erfindung betrifft eine Einlassdose, verbindbar mit wenigstens einem Schutzrohr mit einem vorgegebenen Aussendurchmesser, insbesondere zum Aufbau von Elektroinstallationen nach dem Oberbegriff des Anspruchs 1.

Für Gebäudeinstallationen sind über Schutzrohre miteinander verbundene Einlassdosen vorgesehen. Die Schutzrohre - die auch als Leerrohre oder Rohrschläuche bezeichnet werdenund die Einlassdosen dienen als Basis für Leitungsnetze, beispielsweise Stromversorgungsnetze, Fernsehkabelnetze, Datenleitungsnetze aber auch Heizungs- und Wasserversorgungsnetze, in Gebäuden. Beispielsweise werden bei einer Elektro-Endinstallation in einem ersten Arbeitsschritt elektrische Leiter in die mit den Einlassdosen verbundenen Schutzrohre eingezogen. In einem weiteren Arbeitsschritt werden elektrische Schalt-Anschluss- und/oder Leiterverbindungselemente, die über die Zugangsöffnung der Einlassdosen in diese eingefügt werden, an die Leiter angeschlossen.

Bei Installationsobjekten, wie z.B. aus Span- oder Gipskartonplatten errichteten Holzverbauten und Hohlwänden, werden im Allgemeinen Einlassdosen - beispielsweise in Form von runden, topfförmigen, einteiligen Hohlwanddosen - und Schutzrohre - insbesondere in Form von glatten, flexiblen Kunststoffrohren oder gerillten Wellschläuchen aus Kunststoff - für den Aufbau von Elektroinstallationen eingesetzt. Die Umwandung solcher Hohlwanddosen weist im Allgemeinen Aufnahmen für die Schutzrohre beispielsweise in Form von ausbrechbaren bzw. vorgeprägt ausstechbaren Einführöffnungen auf. Eine der Anzahl der anzuschliessenden Schutzrohre entsprechende Anzahl von Einführöffnungen müssen vom Monteur vor Ort aus der Hohlwanddose ausgebrochen bzw. mit einem Werkzeug ausgestochen werden. Die Einlassdosen können dann in den dafür vorgesehenen Ausbrüchen oder Ausschnitten der Span- oder Gipskartonplatten eingelassen und mit den Schutzrohren verbunden werden. Da das Einziehen der Leiter meist nach der Errichtung der Hohlwände oder der Holzverbauten erfolgt, kann ein Herausgleiten von Schutzrohren aus den jeweiligen Aufnahmen das nachfolgende Einziehen der Leiter verunmöglichen, da die Schutzrohre im Gegensatz zu den Einlassdosen nach der vollendeten Errichtung in der Regel nicht mehr zugänglich sind. Deshalb muss die Positionierung der Schutzrohre in oder direkt vor den Aufnahmen der Einlassdosen mit entsprechenden Befestigungen an dem Installationsobjekt sichergestellt werden.

Auch bei Elektroinstallationen, die in Massivwänden bzw. -decken eingegossen werden, sind in den Aufnahmen der beispielsweise als Abzweig-, Durchgangs-, oder Anschlussdosen ausgebildeten Einlassdosen befindliche Enden der Schutzrohre unabdingbar. Da beim Eingiessen und anschliessenden Vibrieren des Betons unweigerlich grössere Kräfte auf die Schutzrohre ausgeübt werden, ist eine entsprechend aufwendige Befestigung der Schutzrohre in der Nähe der Aufnahmen unbedingt erforderlich.

Für gerillte Kunststoffrohrschläuche sind Spezialsprengringe bekannt, welche durch ein Aufschnappen auf die durch die Aufnahmen der Einlassdosen geschobenen Kunststoffrohrschläuche deren Herausgleiten verhindern sollen. Da trotz der Montage dieser zusätzlichen Spezialsprengringe ein Herausgleiten der Kunststoffrohrschläuche aus den Aufnahmen schon bei in der Praxis immer wieder auftretenden Krafteinwirkungen nicht mehr zuverlässig verhindert wird, haben sich derartige spezielle Sicherungsringe in der Praxis nicht bewährt. Bei glatten, flexiblen Kunststoffrohren erfüllen derartige Sicherungsringe noch unzuverlässiger ihre Aufgabe.

Aus der CH 654 958 ist eine Abzweigdose bekannt, deren Seitenwände mit Wandöffnungen versehen sind, wobei die Wandöffnungen jeweils eine mit der Innenseite der Seitenwand fluchtende, kreisförmige Würgemembran aufweisen. Diese Würgemembran wird durch eine äussere Vertiefung in der Aussenseite der Seitenwand und ein Zentrumsloch in der Seitenwand gebildet, wobei die Würgemembran eine dickere, äussere Ringpartie und eine dünnere, das Zentrumsloch begrenzende, innere Ringpartie aufweist. Diese Wandöffnungen sollen die Aufnahme und Fixierung von meist aus umfangsoder schraubenlinienförmig gerillten oder gewellten Kunststoffrohren bestehenden Schutzschläuchen ermöglichen.

Aus der DE 42 35 196 A1 und der DE 299 12 368 U1 sind ferner Einlassdosen mit speziell ausgebildeten, zylinderförmigen Aufnahmestutzen bekannt. Diese verleihen den eingefügten Schutzrohren eine axiale Führung. Ein Herausgleiten ist nur mehr in einer Richtung möglich. Die in der DE 42 35 196 A1 offenbarte Ausbildung der Aufnahmestutzen über einen separaten Aufnahmeteil unterhalb der Dose bedingt eine recht aufwendige Fertigung dieser Dose. In der DE 299 12 368 U1 ist eine aus einem Boden und mehreren Seitenteilen zusammensteckbare Einlassdose geoffenbart, die vor Ort einen entsprechend hohen Montageaufwand erfordert. Daher sind derartige Ausbildungsformen von Einlassdosen praktisch nicht in Verwendung.

In der DE 197 41 405 A1 wird eine für eine fabrikmässige, vollautomatisierte Montage von Elektroinstallationen in Fertigteilwänden vorgesehene, zweiteilige Einlassdose geoffenbart. Diese zweiteilige Einbaudose weist vier ausgesparte Einführöffnungen auf. Die Trennebene der zwei miteinander schnappbar verbindbaren Gehäusehälften verläuft durch die Zentren der Einführöffnungen. In die erste Dosenhälfte wird in zwei gegenüberliegende Einführöffnungshälften ein Schutzrohr eingelegt und durch ein Aufschnappen der zweiten auf die erste Dosenhälfte eingeklemmt. Das in der Dose verlaufende Schutzrohrstück muss abgestochen und entfernt werden. Zudem sind diese zweiteiligen Einlassdosen den von den Krallenbefestigungseinrichtungen der eingefügten Schalt- und Anschlusselemente ausgeübten Druckkräften nicht immer gewachsen. Auf Baustellen auftretende Krafteinwirkungen auf Schutzrohre können zudem zu einem Aufsprengen der zweiteiligen Einlassdosen und zu einem Herausgleiten der eingeklemmten Schutzrohre führen.

Der Erfindung liegt daher die Aufgabe zu Grunde, die Mängel des Standes der Technik zu beheben. So soll eine erfindungsgemässe Einlassdose durch ein sicheres Zurückhalten der eingeschobenen Schutzrohre den Montageaufwand für den Aufbau einer Vorinstallation reduzieren. Dadurch wird insbesondere ein störungsfreies Einziehen der Leiter und damit ein problemloses Verbinden der Leiter mit Schalt- oder Ansteckelementen ermöglicht. Nicht zuletzt ist es von Vorteil, wenn eine solche Einlassdose eine robuste, für Baustellen geeignete und mit vertretbarem Mehraufwand herzustellende Konstruktion aufweist.

Diese Aufgabe wird durch eine Einlassdose gelöst, bei der die Merkmale des unabhängigen Patentanspruchs verwirklicht sind.

Vorteilhafte bzw. alternative Ausbildungsvarianten der Erfindung sind in den abhängigen Patentansprüchen angeführt.

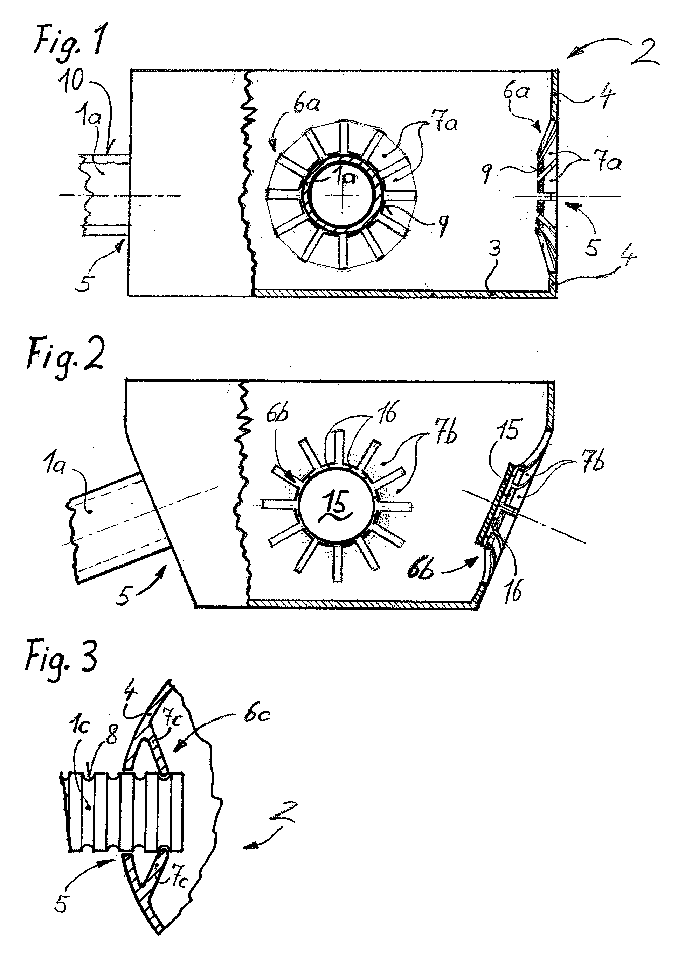

Unter Einlassdosen im Sinne der Erfindung sollen Hohlwanddosen, Abzweigdosen, Verteilerdosen, Deckendosen, Auf- oder Unterputzdosen, Anschlussdosen, Stecker- bzw. Schalterdosen sowie generell Wand- bzw. Deckenauslässe, die als Teil einer Gebäudeinstallation mit wenigstens einem Ende eines Schutz- bzw. Leerrohrs oder eines Wellschlauchs in Verbindung stehen, wie weiter unten rein beispielhaft anhand der Figuren 1, 2, 3, 4 bzw. Figur 5 dargestellt.

Die Erfindung macht sich den Umstand zunutze, dass der notwendige Befestigungsaufwand für Schutzrohre an Installationsobjekten, wie beispielsweise Hohlwände bzw. zu giessende Massivdecken und -wände, um so geringer ist, je robuster die Verbindung der Schutzrohre mit den am Installationsobjekt befestigten bzw. anzubringenden Einlassdosen ist. Gemäss der Erfindung weist eine Einlassdose auch die Funktion eines insbesondere selbsthemmenden Befestigungsmittels für Schutzrohre am Installationsobjekt auf, die ein zuverlässiges Zurückhalten des aufgenommenen Schutzrohrs gewährleistet. Eine derartige Einlassdose ist damit zugleich ein Befestigungselement für Schutzrohre, welches die in der Praxis auf Schutzrohre wirkenden Kräfte aufnehmen kann und über die Befestigung der Einlassdose am Installationsobjekt weiterleitet.

Gegebenenfalls - in Abhängigkeit der Länge sowie des Verlaufs eines Schutzrohrs - kann bei der Verbindung zwischen erfindungsgemässen Einlassdosen auf die Befestigung der Schutzrohre am Installationsobjekt gänzlich verzichtet werden.

Gemäss der Erfindung wird eine Einlassdose mit einem insbesondere einteiligen Gehäuse, in dem wenigstens eine Aufnahme für ein Schutzrohr vorgesehen ist, vorgeschlagen, die eine Einrichtung zum Zurückhalten des Schutzrohrs, mit wenigstens zwei gegen das Innere des Gehäuses gerichteten Rückhalteelementen, aufweist. Diese Zurückhalteeinrichtung ist einer Aufnahme, in die ein Schutzrohr mit vorgegebenen Aussendurchmesser einschiebbar ist, integral zugeordnet und bewirkt - selbsthemmend oder gegebenenfalls über mechanische Mittel aktivierbar - durch eine mechanische Wirkverbindung zwischen den Rückhalteelementen und dem Schutzrohr beim Herausziehen des Schutzrohrs Rückhaltekräfte auf das Schutzrohr. Durch diese unverlierbare Zurückhalteeinrichtung ist jederzeit auch unter schwierigen Montagebedingungen eine Sicherung der Schutzrohre in den Aufnahmen möglich.

Unter mechanischen Mitteln in Sinne der Erfindung sind dabei im weitesten Sinne mechanische Befestigungs- oder auch Maschinenelemente, wie beispielsweise Kopf-, Stift- oder Madenschrauben, Bolzen, Stifte, Keile, Federn und/oder Drähte in den verschiedensten Ausbildungsvarianten sowie aus den verschiedensten Materialien zu verstehen, die mitteloder unmittelbar die zurückhaltende Wirkverbindung der Zurückhalteeinrichtung auslösen. Es versteht sich von selbst, dass eine, gegebenenfalls ein Werkzeug erfordernde, Aktivierung einer Zurückhalteeinrichtung über ein mechanisches Mittel - gegenüber einer selbsthemmenden Zurückhalteeinrichtung ohne eine solche Aktivierung - einen zusätzlichen Aufwand bei der Verbindung eines Schutzrohrs mit einer Einlassdose erfordert.

Mit Vorteil sind die Rückhalteelemente so ausgebildet, dass ein Einführen eines beispielsweise als Wellschlauch ausgebildeten Schutzrohrs in die Zurückhalteeinrichtung ein Klickgeräusch zur Folge hat. Damit wird die Aktivierung der Zurückhalteeinrichtung akustisch überprüfbar und bestätigbar.

Eine vorteilhafte Weiterbildung der Erfindung ist die Hinzufügung eines ebenfalls der Aufnahme zugeordneten Endanschlages für das Einschieben der Schutzrohre. Damit können Schutzrohre bis zu einer genau definierten Einschiebtiefe in die Einlassdose eingeschoben werden. Dies ist vor allem von Vorteil, wenn beim Einschieben der Schutzrohre keine Sicht in die Einlassdose gegeben ist. Dies ist beispielsweise bei auf einer Betonschalung montierten Einlassdosen praktisch immer der Fall.

Nachstehend wird die Erfindung anhand der Figuren der Zeichnung rein beispielhaft näher erörtert. Gleiche Teile in unterschiedlichen Ausführungsbeispielen, welche dieselben Funktionen ausüben, sind nachstehend mit gleichen Bezeichnungen versehen. Sind diesen Bezeichnungen Bezugszeichen zugeordnet, so weisen sie dieselben Bezugszeichennummern auf, an die gegebenenfalls unterschiedliche Kleinbuchstaben hinzugefügt sind. Es zeigen:
- Figur 1: ein Ausführungsbeispiel einer erfindungsgemässen Einlassdose im teilweisen Schnitt in Seitenansicht,
- Figur 2: eine modifiziertes Ausführungsbeispiel der Einlassdose aus Figur 1 im teilweisen Schnitt in Seitenansicht,
- Figur 3: ein weiteres Ausführungsbeispiel im Detailschnitt in Draufsicht,
- Figur 4: ein weiteres Ausführungsbeispiel im Schnitt in Seitenansicht und
- Figur 5: eine als Abzweigdose für zu giessende Massivdecken ausgebildete Einlassdose im teilweisen Schnitt in Seitenansicht.

Figur 1 zeigt eine im teilweisen Schnitt dargestellte Einlassdose und zwei in diese eingeschobenen Schutzrohre 1a. Die Einlassdose ist hier in Form einer Abzweigdose bzw. die Schutzrohre 1a sind in Form glatter, flexibler Kunststoffrohre ausgebildet. Diese Abzweigdose weist ein Gehäuse 2 auf. Das Gehäuse 2 umfasst einen Boden 3 und eine einenends mit dem Boden 3 verbundene und andernends eine Zugangsöffnung bildende Umwandung 4. In der Umwandung 4 sind vier Aufnahmen 5 (in Figur 1 sind nur zwei sichtbar) für Schutzrohre 1a, von einem vorgegebenen Aussendurchmesser, angeordnet.

Gemäss der Erfindung ist einer Aufnahme 5 eine Zurückhalteeinrichtung 6a integral zugeordnet. In diesem Ausführungsbeispiel ist die Zurückhalteeinrichtung 6a in Form von zwölf krallenförmigen Rückhalteelementen 7a ausgebildet. Diese Rückhalteelemente 7a sind ringförmig angeordnet und gehen einenends in die Umwandung 4 über. Hier weisen sie zudem dieselbe Materialstärke wie die Umwandung 4 auf. Anderenends sind die Rückhalteelemente 7a hier mit einer Kante 9 versehen.

Die Rückhalteelemente 7a sind gegen die Umwandung 4 geneigt ausgebildet und bilden auf diese Weise eine Einführschräge zum leichtgängigeren Einführen des Schutzrohrs 1a. Der Radius der durch die ringförmig angeordneten Rückhalteelemente 7a bestimmten Innenkontur der Aufnahme 5 ist etwas kleiner als der Aussenradius des einzuführenden Schutzrohrs la. Beim Einführen eines Schutzrohrs 1a werden die Rückhalteelemente 7a etwas vom Zentrum der Aufnahme 5 weggeschoben und damit die Innenkontur der Aufnahme 5 etwas vergrössert. Das Schutzrohr 1a kann in die Aufnahme 5 eingeschoben werden.

Wird eine Herausziehkraft auf das Schutzrohr 1a in Rohrrichtung ausgeübt, so bewegt sich das Schutzrohr 1a und die Rückhalteelemente 7a etwas vom Zentrum der Abzweigdose weg. Die Kanten 9 der Rückhalteelemente 7a werden dadurch selbsthemmend gegen die glatte Aussenseite 10 des Schutzrohrs 1a gepresst. Von den Rückhalteelementen 7a werden der Herausziehkraft entgegengerichtete Rückhaltekräfte auf das Schutzrohr 1a ausgeübt. Eine Herausgleiten des Schutzrohrs 1a kann so wirkungsvoll verhindert werden. Die in Figur 1 gezeigte Zurückhalteeinrichtung 6a zeichnet sich im Vergleich zum Stand der Technik durch besonders hohe Rückhaltekräfte aus. Bei einer geeigneten Dimensionierung und Materialwahl der Einlassdose überschreiten je nach Belastung diese Rückhaltekräfte einige Hundert Newton.

Figur 2 zeigt ein modifiziertes Ausführungsbeispiel einer Einlassdose und im Gegensatz zur Figur 1 nur ein Schutzrohr 1a. Die anderen Aufnahmen 5 sind jeweils mit einem Deckel 15 versehen. Der Deckel 15 ist hier über zwölf dünne Stege 16 mit jeweils einem Rückhalteelement 7b verbunden. Die Stege 16 bilden an sich bekannte Sollbruchstellen für ein Ausbrechen des Deckels 15. Ein Deckel zum Abdecken einer Aufnahme 5 könnte aber genauso gut klemmend oder einrastend in der jeweiligen Aufnahme 5 angebracht sein. Da jede Einlassdose mit wenigstens einem Schutzrohr 1a zu verbinden ist, weist im allgemeinen wenigstens eine Aufnahme 5 keinen Deckel 15 auf.

Im Gegensatz zu Figur 1 ist bei diesem Ausführungsbeispiel der untere Teil der Umwandung 4, in dem die Aufnahmen 5 vorgesehen sind, schief ausgebildet. Auch sind hier die Rückhalteelemente 7b der Zurückhalteeinrichtung 6b nicht plan sondern gebogen ausgebildet. Die ermöglicht eine einfachere Werkzeugkonstruktion für erfindungsgemässe Einlassdosen, welche als einstückige Spritzgussteile aus Kunststoff ausgebildet sind.

Figur 3 zeigt einen Ausschnitt eines weiteren Ausführungsbeispiels einer Einlassdose und ein in Form eines gerillten Wellschlauchs ausgebildetes Schutzrohr 1c in Draufsicht. Die hier als Hohlwanddose ausgebildete Einlassdose weist ein zylinderförmiges Gehäuse 2 auf. Der dargestellte Ausschnitt der Umwandung 4 weist eine in Form einer Bohrung ausgebildete Aufnahme 5 auf, deren Innendurchmesser in etwa dem vorgegebenen Aussendurchmesser des Schutzrohrs 1c entspricht. Eine hier einfach ausgebildete Zurückhalteeinrichtung 6c weist zwei separate, klappenförmige Rückhalteelemente 7c auf. Diese sind symmetrisch zueinander, jeweils seitlich der Aufnahme 5 angeordnet und dieser erfindungsgemäss integral zugeordnet. Einenends sind die zwei Rückhalteelemente 7c mit der Umwandung 4 verbunden und andernends weisen deren freie Enden zueinander einen Abstand auf, der etwas kleiner ist als der vorgegebene Aussendurchmesser des Schutzrohrs 1c. Beim Einschieben des Schutzrohrs 1c werden die beiden Rückhalteelemente 7c etwas auseinander bewegt und ermöglichen so ein Einführen des Schutzrohrs 1c. Wird hingegen das Schutzrohr 1c durch eine Herausziehkraft aus der Hohlwanddose herausbewegt, so rasten die klappenförmigen Rückhalteelemente 7c in eine der Rillen 8 des Schutzrohrs 1c ein.

Soll alternativ ein glattes Schutzrohr (siehe Figur 1) durch eine solche Aufnahme 5 zurückgehalten werden, so können sich die Rückhalteelemente 7c - bei einer geeigneter Ausbildung derselben - in der glatten Oberfläche des Schutzrohrs selbsthemmend verkrallen.

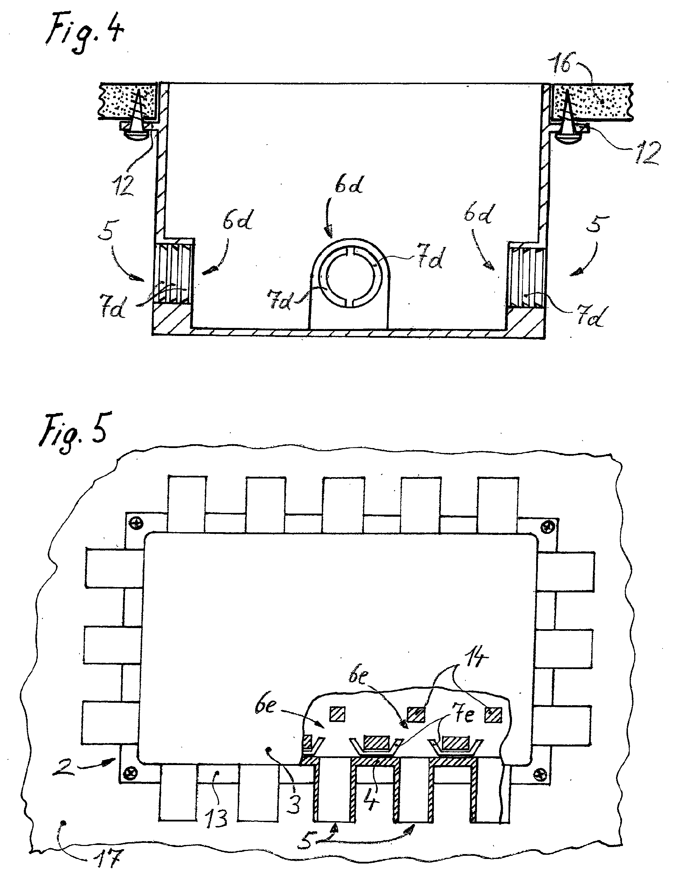

Figur 4 zeigt ein weiteres Ausführungsbeispiel einer Hohlwanddose gemäss der Erfindung, das in einer dafür vorgesehenen Ausnehmung einer Wandplatte 18 einer Leichtbauwand eingesetzt und hier über Befestigungslaschen 12 mittels Schrauben befestigt ist. Eine weitere Ausbildungsform einer Zurückhalteeinrichtung 6d ist hier jeweils einer der Aufnahmen 5 integral zugeordnet. Diese Ausbildungsform weist paarweise gegenüberliegende Rückhalteelemente 7d auf. Die Rückhalteelemente 7d sind im Wesentlichen als halbkreisförmige Rückhaltelippen ausgebildet. Im Vergleich zu einer einzigen - ringförmig geschlossenen - Rückhaltelippe erfordern mehrere entlang einer Umfangslinie getrennt voneinander anliegende Rückhaltelippen einen geringeren Kraftaufwand für das Einführen eines Schutzrohrs (siehe Figur 1, 2 oder 3). Zudem sind hier drei Paare von Rückhalteelementen 7d lamellenförmig hintereinander angeordnet. Dadurch können die Paare beim Einführen des Schutzrohres einzeln nacheinander vom Ende des Schutzrohres passiert werden. Die für das Einführen notwendigen Kräfte können dadurch weiter reduziert werden.

An der Aussenseite der Umwandung 4 sind Befestigungslaschen 12 zur Befestigung der Einlassdose an der Wandplatte 18 mittels Schrauben angebracht. Die Befestigungslaschen 12 können zudem die Funktion eines Montageanschlags bei einer vorgegebenen Plattenstärke aufweisen. Anstatt mehrerer Befestigungslaschen 12 könnte auch ein einziger umlaufender Befestigungsflansch (siehe Figur 5) vorgesehen sein.

Figur 5 zeigt eine als Abzweigdose für den Einbau in zu giessende Massivdecken ausgebildete Einlassdose, die hier in an sich bekannter Weise über vier Schrauben auf einer Schalung 17 befestigt ist, in Draufsicht. Die dargestellte Abzweigdose weist eine Umwandung 4, die einenends mit einem Boden 3 und andernends mit einem Befestigungsflansch 13 verbunden ist, und sechzehn mit Stutzen versehene Aufnahmen 5 auf. Diese Abzweigdose weist eine rechteckförmige Grundform auf. Je nach Anwendung sind aber auch andere, beispielsweise runde oder polygonale, Grundformen möglich. In der Ebene des Befestigungsflansches 13 wird von der Umwandung 4 die - in Figur 5 nur beim im Schnitt dargestellten Teil sichtbare - Zugangsöffnung gebildet. Die Umwandung 4 und der Boden 3 bilden das Gehäuse 2 der Abzweigdose. Über die Schrauben ist der Befestigungsflansch 13 in an sich bekannter Weise an der Schalung 17 befestigt, und so gegen ein Fortbewegen beim Eingiessen des Betons in die Schalung 17 zuverlässig gesichert.

Damit bei herkömmlichen Abzweigdosen ein Herausgleiten der Schutzrohre (siehe Figur 1, 2 oder 3) aus den Aufnahmestutzen zuverlässig verhindert wird, müssen einerseits die Schutzrohre einzeln an den in Figur 5 nicht eingezeichneten Armierungseisen mit grossem Aufwand befestigt und andererseits die Schutzrohre über die Aufnahmen 5 weit in das Innere der Abzweigdose eingefügt werden. Nach dem Aushärten des Betons müssen dann diese weit in die Abzweigdose hineinstehenden Schutzrohrstücke abgestochen werden.

Hingegen kann bei der in Figur 5 dargestellten Abzweigdose, deren Aufnahmen 5 eine integral zugeordnete Zurückhalteeinrichtung 6e aufweisen, die Befestigung der Schutzrohre weniger aufwendig gestaltet werden. Eingefügte Schutzrohre werden an der bereits an der Schalung 17 befestigten Abzweigdose zuverlässig über die Rückhalteelemente 7e der Zurückhalteeinrichtungen 6e zurückgehalten.

In diesem Ausführungsbeispiel sind die Rückhalteelemente 7e als symmetrische Metallbügel ausgebildet, die an der Innenseite der Umwandung 4 befestigt sind. Die Ausbildung dieser Zurückhalteeinrichtung 6e könnte selbstverständlich auch in anderer Weise - beispielsweise gemäss den Ausbildungsvarianten der Figur 1, 2, 3 oder 4 - erfolgen.

Diese Abzweigdose weist zudem Endanschläge 14 auf, die ebenfalls den Aufnahmen 5 integral zugeordnet sind. Mit Hilfe dieser Endanschläge 14 können die Schutzrohre exakt mit der gewünschten Einschiebtiefe in den Aufnahmen 5 positioniert werden. Ein späteres Abstechen der Schutzrohrstücke, die zu weit in die Abzweigdose hineinreichen, erübrigt sich dadurch.

## Patentansprüche

1. Einlassdose, verbindbar mit wenigstens einem Schutzrohr (1a, 1c) mit einem vorgegebenen Aussendurchmesser, insbesondere zum Aufbau von Elektroinstallationen, welche Einlassdose ein insbesondere einteiliges Gehäuse (2) aufweist, welches Gehäuse (2) einen Boden (3) und eine einenends eine Zugangsöffnung bildende, anderenends mit dem Boden (3) verbundene, insbesondere zusammenhängende, Umwandung (4) aufweist, wobei das Gehäuse (2) wenigstens eine Aufnahme (5) zum Einführen des Schutzrohrs (1a, 1c) aufweist, wobei der Aufnahme (5) eine Einrichtung (6a, 6b, 6c, 6d, 6e) zum, insbesondere selbsthemmenden, Zurückhalten des eingeführten Schutzrohrs (1a, 1c) integral zugeordnet ist, **dadurch gekennzeichnet, dass** die Zurückhalteeinrichtung (6a, 6b, 6c, 6d, 6e) wenigstens zwei gegen das Innere des Gehäuses (2) orientierte Rückhalteelemente (7a, 7b, 7c, 7d, 7e) aufweist.

2. Einlassdose nach Anspruch 1, **dadurch gekennzeichnet, dass** die Rückhalteelemente (7c, 7e) wenigstens zum Teil im Inneren des Gehäuses (2) angeordnet sind.

3. Einlassdose nach Anspruch 1 oder 2, **dadurch gekennzeichnet, dass** die Rückhalteelemente (7c, 7e) einenends an der Innenseite der Umwandung (4), insbesondere seitlich der Aufnahme (5), angeordnet und anderenends ins Innere des Gehäuses (2) ragen.

4. Einlassdose nach einem der vorhergehenden Ansprüche, **dadurch gekennzeichnet, dass** mehrere ringförmig angeordnete, einenends bündig in die Umwandung (4) übergehende, voneinander getrennte Rückhalteelemente (7a, 7b) vorgesehen sind, die andernends die Innenkontur der Aufnahme (5) bilden und gegen das Innere des Gehäuses (2) gebogen ausgebildet sind.

5. Einlassdose nach einem der vorhergehenden Ansprüche, **dadurch gekennzeichnet, dass** die Rückhalteelemente (7c) in Form von Rastelementen zum Einrasten in die, gegebenenfalls Rillen (8) aufweisende, Aussenseite des einzuführenden Schutzrohrs (lc) ausgebildet sind.

6. Einlassdose nach einem der vorhergehenden Ansprüche, **dadurch gekennzeichnet, dass** die Rückhalteelemente (7a, 7b, 7e) mit einer Kante (9) versehen sind, wobei beim Ausüben einer Zugkraft auf das eingeführte Schutzrohr (1a, 1c) sich die Kante (9) in der gegebenenfalls glatten Aussenseite (10) des Schutzrohrs (1a) verkrallt.

7. Einlassdose nach einem der vorhergehenden Ansprüche, **dadurch gekennzeichnet, dass** die Rückhalteelemente (7a, 7b, 7c) und die Umwandung (4) im Wesentlichen die gleiche Materialstärke aufweisen.

8. Einlassdose nach einem der vorhergehenden Ansprüche, **dadurch gekennzeichnet, dass** die Rückhalteelemente (7d) in Form von Rückhaltelippen ausgebildet sind, wobei die Rückhaltelippen wenigstens zum Teil entlang mehrerer axial hintereinander liegender Umfangslinien des einzuführenden Schutzrohres (1a) lamellenartig aufliegen.

9. Einlassdose nach einem der vorhergehenden Ansprüche, **dadurch gekennzeichnet, dass** das Gehäuse (2) mit den Rückhalteelementen (7a, 7b, 7c, 7d) als einstückiges Spritzgussteil aus Kunststoff ausgebildet ist.

10. Einlassdose nach einem der vorhergehenden Ansprüche, **dadurch gekennzeichnet, dass** wenigstens ein mit dem Gehäuse (2) verbundener Endanschlag (14) vorgesehen ist, welcher das Einführen des Schutzrohrs (1a, 1c) in die Aufnahme (5) mit einer vorgegebenen Einschiebtiefe begrenzt.

11. Einlassdose nach einem der vorhergehenden Ansprüche, **dadurch gekennzeichnet, dass** am Gehäuse (2) wenigstens eine weitere Aufnahme (5) vorgesehen ist, die als mit einem Deckel (15) verbundene, ausbrechbare oder vorgeprägt ausstechbare Aufnahme ausgebildet ist.
